(19) Europäisches Patentamt
European Patent Office
Office européen des brevets

(11) Veröffentlichungsnummer : **0 071 082**
**B1**

(12) # EUROPÄISCHE PATENTSCHRIFT

(45) Veröffentlichungstag der Patentschrift : **22.01.86**

(51) Int. Cl.[4] : **H 01 B 1/12**, C 08 F 8/42, C 08 L 49/00

(21) Anmeldenummer : **82106297.3**

(22) Anmeldetag : **14.07.82**

(54) **Verfahren zur Herstellung luftstabiler, elektrisch leitfähiger, polymerer Polyensysteme und ihre Verwendung in der Elektrotechnik und zur antistatischen Ausrüstung von Kunststoffen.**

(30) Priorität : **23.07.81 DE 3130497**

(43) Veröffentlichungstag der Anmeldung : **09.02.83 Patentblatt 83/06**

(45) Bekanntmachung des Hinweises auf die Patenterteilung : **22.01.86 Patentblatt 86/04**

(84) Benannte Vertragsstaaten : **BE DE FR GB NL**

(56) Entgegenhaltungen :
**EP-A- 0 022 271**
**EP-A- 0 029 945**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Naarmann, Herbert, Dr.**
**Haardtblick 15**
**D-6719 Wattenheim (DE)**
Erfinder : **Muench, Volker, Dr.**
**Luitpoldstrasse 114**
**D-6700 Ludwigshafen (DE)**
Erfinder : **Schlag, Johannes, Dr.**
**Leuschnerstrasse 36**
**D-6700 Ludwigshafen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 071 082 B1

**Beschreibung**

Die Erfindung betrifft ein Verfahren zur Herstellung luftstabiler, elektrisch leitfähiger polymerer Systeme mit elektrischen Leitfähigkeitswerten größer als $10^{-2}$ S/cm.

Bei diesen polymeren Systemen handelt es sich um Stoffe, die in der Elektrotechnik zur Herstellung von Sonnenzellen, zur Umwandlung und Fixierung von Strahlung und zur Herstellung elektrischer und magnetischer Schalter sowie zur antistatischen Ausrüstung von Kunststoffen verwendet werden können.

Polyensysteme wie Poly(acetylen) sind bekanntermaßen luftempfindlich [vgl. J.M. Pochan et al. in « Macromolecules », Band 14, Seiten 110-114 (1980) und « Journal of Polymer Science, Polymer Letters Edition », Band 13, Seiten 447 bis 451 (1980)]. Dies schränkt die Anwendung von Poly(acetylen), welches durch Komplexierungsmittel wie $AsF_5$ oder Na zu hochleitfähigen Polymeren umgesetzt werden kann, stark ein. Zur Komplexierung von Poly(acetylen) siehe z. B. A.G. Diamid und A.J. Heeger, « Synthetic Metals », Band 1, Seiten 101-118 (1980).

Aus der EP-A-0 022 271 sind Poly(acetylene) bekannt, die mit bestimmten Komplexierungsmitteln, wie Platinmetallkomplexen, Carboniumsalzen, Oxoniumsalzen oder Parabenzochinonderivaten gedopt sind. Die Eigenschaften derartiger komplexierter Polyacetylene sind jedoch hinsichtlich der Widerstandsfähigkeit gegen Sauerstoff noch nicht befriedigend.

Es ist bekannt, daß in Übergangsmetall-π-Akzeptor-, -olefin-, -alkyl- oder -aromaten-Komplexen die Liganden L gegen andere Liganden ausgetauscht werden können. Dies geschieht im Sinne einer Verdrängungsreaktion bei der sich auch Gleichgewichte einstellen können :

$$ML_n + nL' \rightleftharpoons ML_{(n-1)}L'_1 + (n-1)\ L' + L$$

oder

$$ML_n + nL' \rightleftharpoons ML'_n + nL$$

Als konkrete Beispiele sind folgende Reaktionen anzuführen :

$$Ni(CO)_4 + 4PF_3 \rightarrow Ni(PF_3)_4 + 4CO$$

$$Fe(CO)_5 + \text{Butadien} \rightarrow Fe(CO)_3\ \text{Butadien} + 2CO$$

[vgl. Cotton Wilkinson, « Comprehensive Inorganic Chemistry », Vol. 4 (1973), Pergamon Press]

oder

$$CO_2(CO)_8 + 2\ \text{Norbonadien} \rightarrow$$

$$CO_2(CO)_4 \cdot (\text{Norbonadien})_2 + 4CO$$

[vgl. G.A. Wilkinson et al., « Journal of the Chemical Society », 1961, Seiten 602-605]

Der Erfindung lag die Aufgabe zugrunde, Poly(acetylen) und deren Homologe gegen Luft und Sauerstoff zu stabilisieren.

Diese Aufgabe wurde erfindungsgemäß dadurch gelöst, daß man ein Polyen der allgemeinen Formel (I)

$$(\text{—}CR = CR'\text{—})_n \qquad (I)$$

worin n = 5 bis 1 000, R und R' gleich und verschieden sein können mit R und R' = H, $C_1$-$C_5$-Alkyl, Cycloalkyl, Aryl, CN, F, Cl, Br, oder R und R' = $—CH_2—$, welches cyclisch durch Alkylidenbrücken der Form $(—CH_2—)_m$ mit m = 1 bis 2 verknüpft ist, oder ein polycyclisches aromatisches System, das mit der Doppelbindung des Polyens (I) in peri-Stellung verknüpft ist, umsetzt mit einer Übergangsmetallkomplexverbindung der allgemeinen Formel (II) :

$$M_1L_x^1L_y^2 \qquad (II)$$

worin M = Übergangsmetall der I., IV., V., VI., VII. oder VIII. Nebengruppe des periodischen Systems der Elemente, $L^1$ = (CO), $L^2$ = Cl, Br, I, H, (CS), (CO), $M'R^1R^2R^3$ mit $R^1$, $R^2$ und $R^3$ = gleich oder verschieden und $R^1$, $R^2$ und $R^3$ = F, Cl, Br, H, $C_1$-$C_6$-Alkyl, Cycloalkyl, Aryl, $C_1$-$C_6$-Alkoxy, Aryloxy und M' = P, As, Sb und 1 und x und y = 1 bis 20, wobei unter teilweisem Austritt von Liganden $L^1$ oder $L^2$ Polymere entstehen, die Struktureinheiten der allgemeinen Formeln (III), (IV) und (V)

(III)

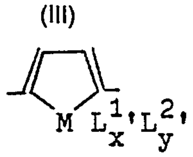

(IV)

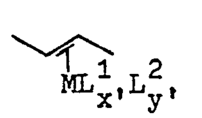

(V)

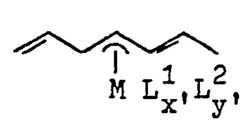

einpolymerisiert enthalten, worin M ein oben angegebenes Übergangsmetall ist, $L^1$ und $L^2$ die oben erwähnten Liganden sind und x' = 1 bis 6 und y' = 0 bis 6 sind und diese Polymere gegebenenfalls mit üblichen Komplexierungsmitteln umsetzt.

Nach bevorzugter Verfahrensweise setzt man die Übergangsmetallverbindung der allgemeinen Formel (II) in einem Lösungsmittel gelöst ein und die Umsetzung mit dem Polyen der allgemeinen Formel (I) wird bei 0 bis + 100 °C unter Inertgas durchgeführt.

Besonders bevorzugt ist ein Verfahren, bei dem man als übliche Komplexierungsmittel oxidierende Lewissäuren wie $AsF_5$, $SbF_5$, $SbCl_5$ oder $FeCl_3$ ; nichtoxidierende Lewissäuren und ein Oxidationsmittel wie $PCl_5$ und $Cl_2$, $PF_5$ und NOF, $PF_5$ und $NO_2F$, $BF_4$ und NOF oder Metalle mit stark negativen Redoxpotentialen wie Li, Na, K, Rb oder Cs in der Gasphase oder in Lösung auf das Polymere, welches Struktureinheiten der allgemeinen Formeln (III), (IV) und (V) besitzt, einwirken läßt.

Geeignete Polyene der allgemeinen Formel (I) sind z. B. :

cis-Poly(acetylen), $(CH=CH)_n$
trans-Poly(acetylen), $(CH=CH)_n$
cis-trans-Poly(acetylen),
Poly(methylacetylen),
Poly(phenylacetylen),
Poly(chloracetylen),
Poly(fluoracetylen),
Poly(bromacetylen),
Poly(cyanoacetylen),
Poly(ethylacetylen),
Poly(cycloheptadien),

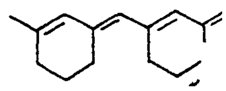

Poly(acenaphthenylidenacetylen),

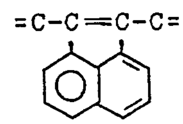

Besonders gut geeignet ist cis-Poly(acetylen).

Die räumliche Konfiguration an der Doppelbindung der Polyene (I) kann entweder all-cis oder alltrans oder in größeren Blöcken alternierend cis und trans sein.

Die Polyene (I) sind an sich bekannt, ihre Herstellung ist beschrieben z. B. in den Literaturstellen « Macromolecules » *7* (1974), 728 oder « Journal of Polymer Science, Polymer Chemistry Edition » *12* (1974), 11 oder « Chemical Communications » (1980), 426 oder « European Polymer Journal » *17* (1981), 197.

Die geeigneten Übergangsmetalle M der Formel (II) sind dadurch gekennzeichnet, daß sie den I, IV, V, VI, VII und VIII Nebengruppen des periodischen Systems angehören. Unter periodischem System ist das, z. B. in dem Lehrbuch « Anorganische Chemie » von F.A. Cotton und G. Wilkinson, Verlag Chemie, Weinheim, 1974, beschriebene periodische System der Elemente zu verstehen. Geeignete Elemente sind z. B. Cu, Ag, Au, Ti, Zr, Hf, V, Nb, Ta, Cr, Mo, W, Mn, Tc, Re, Fe, Ru, Os, Co, Rh, Ir, Ni, Pd, Pt. Besonders gut geeignet ist Fe. Diese Elemente besitzen gemäß den Regeln zum Aufbau des periodischen Systems nach dem im obengenannten Lehrbuch beschriebenen Pauli-Prinzip freie 3d, 4d bzw. 5d Orbitale, die sie befähigen mit π-Akzeptor-Liganden (π-Säuren) Komplexe zu bilden, welche durch π-Rückbindung stabilisiert sind. Zum Begriff π-Akzeptor und π-Rückbindung siehe das obengenannte Lehrbuch auf den Seiten 725ff und 728ff.

Geeignete π-Akzeptor-Liganden (π-Säuren) als Liganden $L^1$ und $L^2$ sind $L^1$ = CO und $L^2$ wahlweise = H, Cl, Br, J, (CO), (CS), $M'R^1R^2R^3$ [mit $R^1$, $R^2$, $R^3$ gleich oder verschieden und $R^1 = R^2 = R^3$ = F, Cl, Br, H, $C_1$-$C_6$-Alkyl, Cycloalkyl, Aryl, $C_1$-$C_6$-Alkoxy, Aryloxy, und M' = P, As, Sb].

Geeignete Übergangsmetallverbindungen der allgemeinen Formel (II) $M_lL_m^1L_n^2$ sind somit

einkernige Carbonyle wie z.B. $V(CO)_6$, $Cr(CO)_6$, $Mo(CO)_6$, $W(CO)_6$, $Fe(CO)_5$, $Ru(CO)_5$, $Os(CO)_5$, $Ni(CO)_4$,

mehrkernige Carbonyle wie z. B. $Mn_2(CO)_{10}$, $Tc(CO)_{10}$, $Re_2(CO)_{10}$, $ReMn(CO)_{10}$, $Fe_2(CO)_9$, $Os_2(CO)_9$, $Co_2(CO)_8$, $Rh_2(CO)_8$, $Fe_3(CO)_{12}$, $Ru_3(CO)_{12}$, $Os(CO)_{12}$, $Re_4(CO)_{12}$, $Co_4(CO)_{12}$, $Co_6(CO)_{16}$, $Rh_4(CO)_{12}$, $Rh_6(CO)_{16}$, $Ir_4(CO)_{12}$,

kationische Carbonylkomplexe wie z. B. $Re(CO)_6^{\oplus}$, $Os(CO)_6^{\oplus}$ u. a.

Carbonylhalogenide wie z. B. $Fe(CO)_4I_2$, $Mo_2(CO)_8Cl_4$, $Os_3(CO)_{12}Br_2$ u. a.

Carbonylhydride wie z. B. $HCo(CO)_4$, $H_2Fe(CO)_4$, $H_2Ru_4(CO)_{13}$, $HOs_3(CO)_{12}^{\oplus}$ u. a.

Carbonylsulfide wie z. B. (CO) $[C_6H_5Fe(CO)_2(CS)]^{\oplus}$

Carbonylphosphine, -arsine, -stibine wie z. B. $(PCl_3)Mo(CO)_3$, $(AsCl_3)Mo(CO)_3$, $(SbCl_3)Mo(CO)_3$, $[(C_2H_5)_3P]Mo(CO)_3$, $[(C_6H_5O)_3P]Mo(CO)_3$, $(PCl_3)_3Mo(CO)_3$, $(PF_3)_3Mo(CO)_3$, u. a.

Besonders gut geeignete Verbindungen sind $Fe(CO)_5$, $Fe_3(CO)_{12}$, $Co_2(CO)_8$.

Die bei der Umsetzung erhaltenen Polymeren der allgemeinen Formeln (III), (IV) und (V) sind feste Substanzen, die an der Luft stabil sind. So weist z. B. das aus Polyacetylen und Eisencarbonyl erhaltene Produkt mit der Formel (VI)

$$(CH)_n + x\ Fe_3(CO)_{12} \rightarrow [(CH)_n \cdot (Fe(CO)_3]_n + 3n\ CO \qquad (VI)$$

bei gleichzeitiger Luftstabilität hohe elektrische Leitfähigkeit auf.

Nach bevorzugter Verfahrensweise wird die Umsetzung der Polyene (I) mit der Übergangsmetallverbindung (II) in einem Lösungsmittel vorgenommen. Geeignete Lösungsmittel sind hierbei insbesondere Benzol, Toluol, Xylol, n-Hexan, n-Heptan, n-Octan, Petrolether, Ligroin oder Methylenchlorid. Dabei sind Temperaturen zwischen 0 bis 100, bevorzugt 20 bis 90 °C nötig. Als Inertgas wird bevorzugt Argon verwendet.

Die Polymeren, welche die Struktureinheiten der allgemeinen Formeln (III), (IV) oder (V) enthalten, werden gegebenenfalls mit üblichen Komplexierungsmitteln umgesetzt. Unter üblichen Komplexierungsmitteln werden hierbei Verbindungen verstanden, welche oxidierende Lewis-Säuren wie $AsF_5$, $SbF_5$, $SbCl_5$ oder $FeCl_3$, nichtoxidierende Lewis-Säuren und ein Oxidationsmittel wie $PCl_5$ und $Cl_2$, $PF_5$ und NOF, $PF_5$ und $NO_2F$, $BF_4$ und NOF oder Metalle mit stark negativen Redoxpotentialen wie Li, Na, K, Rb oder Cs sind. Die Komplexierungsmittel kann man in der Gasphase oder in Lösung auf die Polymeren einwirken lassen. Die Komplexierungsmittel sind als solche bekannt und z. B. in der Literaturstelle « Synthetic Metals » *1* (1979/80) 101, beschrieben.

Es ist ein Vorteil des erfindungsgemäßen Verfahrens, daß luftstabile, elektrisch leitende Polymere erhalten werden, die in der Elektrotechnik zur Herstellung von Sonnenzellen, zur Umwandlung und Fixierung von Strahlung, zur Herstellung elektrischer und magnetischer Schalter und zur antistatischen Ausrüstung von Kunststoffen verwendet werden können.

Beispiel 1

0,11 g Poly(acetylen) film [≙ 4,23 mmol $C_2H_2$] werden mit 21,3 g $Fe_3(CO)_{12}$ [≙ 42,3 mmol] in 100 ml Benzol bei 82 °C vier Stunden lang unter Inertgas umgesetzt. Der $(CH)_x$-Film wird nach dem Abkühlen der Lösung unter Inertgas aus der Lösung genommen und einen Tag mit Benzol extrahiert. Anschliessend wird der Film im Hochvakuum getrocknet. Der Film hat nach dieser Umsetzung 0,25 g an Gewicht zugenommen. Dies entspricht 1,8 mmol $Fe(CO)_3$.

Zusammensetzung : $[(CH) \cdot (Fe(CO)_3)_{0.21}]_x$

elektrische Leitfähigkeit : $\sigma$ = 9,1 S/cm

Der Film ist luftstabiler und weist eine höhere Leitfähigkeit auf als reines Poly(acetylen).

Beispiel 2

0,1 g Poly(acetylen) film [≙ 3,84 mmol $C_2H_2$] werden mit 10 g $Fe(CO)_5$ [≙ 51 mmol] in 100 ml Benzol 1 Woche lang dem Sonnenlicht ausgesetzt. Die weitere Aufarbeitung erfolgt wie unter Beispiel 1 beschrieben.

Gewichtszunahme des Films nach 1 Woche : 0,15 g ≙ 1,1 mmol $Fe(CO)_3$

Zusammensetzung : $[(CH)\ (Fe(CO)_3)_{0.14}]_x$

**Patentansprüche**

1. Verfahren zur Herstellung luftstabiler, elektrisch leitfähiger polymerer Systeme mit elektrischen Leitfähigkeitswerten größer als $10^{-2}$ S/cm, dadurch gekennzeichnet, daß man ein Polyen der allgemeinen Formel (I) :

$$(-CR = CR'-)_n \qquad (I)$$

worin n = 5 bis 1 000, R und R' gleich und verschieden sein können mit R und R' = H, $C_1$-$C_5$-Alkyl, Cycloalkyl, Aryl, CN, F, Cl, Br, oder R und R' = $-CH_2-$, welches cyclisch durch Alkylidenbrücken der Form $(-CH_2-)_m$ mit m = 1 bis 2 verknüpft ist, oder ein polycyclisches aromatisches System, das mit der Doppelbindung des Polyens (I) in peri-Stellung verknüpft ist, umsetzt mit einer Übergangsmetallkomplexverbindung der allgemeinen Formel (II) :

$$M_lL_x^1L_y^2 \qquad (II)$$

worin M = Übergangsmetall der I., IV., V., VI., VII. oder VIII. Nebengruppe des periodischen Systems der Elemente $L^1$ = (CO), $L^2$ = Cl, Br, I, H, (CS), (CO), $M'R^1R^2R^3$ mit $R^1$, $R^2$ und $R^3$ = gleich oder verschieden und $R^1$, $R^2$ und $R^3$ = F, Cl, Br, H, $C_1$-$C_6$-Alkyl, Cycloalkyl, Aryl, $C_1$-$C_6$-Alkoxy, Aryloxy und M' = P, As, Sb und x und y und l = 1 bis 20, wobei unter teilweisem Austritt von Liganden $L^1$ oder $L^2$ Polymere entstehen, die Struktureinheiten der allgemeinen Formeln (III), (IV) und (V)

(III) (IV) (V)

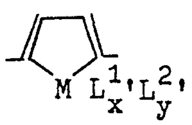 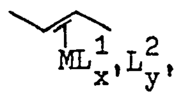 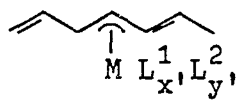

einpolymerisiert enthalten, worin M ein oben angegebenes Übergangsmetall ist, $L^1$ und $L^2$ die oben erwähnten Liganden sind und x' = 1 bis 6 und y' = 0 bis 6 sind und diese Polymere gegebenenfalls mit üblichen Komplexierungsmitteln umsetzt.

2. Verfahren nach Anspruch 1, dadurch gekennzeichnet, daß man die Übergangsmetallverbindung der allgemeinen Formel (II) in einem Lösungsmittel gelöst einsetzt und die Umsetzung mit dem Polyen der allgemeinen Formel (I) bei 0 bis + 100 °C unter Inertgas durchführt.

3. Verfahren nach Anspruch 1, dadurch gekennzeichnet, daß man als übliche Komplexierungsmittel oxidierende Lewissäuren wie $AsF_5$, $SbF_5$, $SbCl_5$ oder $FeCl_3$, nichtoxidierende Lewissäuren und ein Oxidationsmittel wie $PCl_5$ und $Cl_2$, $PF_5$ und NOF, $PF_5$ und $NO_2F$, $BF_4$ und NOF oder Metalle mit stark negativen Redoxpotentialen wie Li, Na, K, Rb oder Cs in der Gasphase oder in Lösung auf das Polymere, welches Struktureinheiten der allgemeinen Formeln (III), (IV) und (V) besitzt, einwirken läßt.

4. Verwendung der nach Anspruch 1 hergestellten elektrisch leitfähigen Polymeren in der Elektrotechnik zur Herstellung von Sonnenzellen, zur Umwandlung und Fixierung von Strahlung und zur Herstellung elektrischer und magnetischer Schalter.

5. Verwendung der nach Anspruch 1 hergestellten elektrisch leitfähigen Polymeren zur antistatischen Ausrüstung von Kunststoffen.

**Claims**

1. A process for the preparation of electrically conductive polymeric systems which are stable to air and have conductivities greater than $10^{-2}$ S/cm, wherein a polyene of the general formula (I)

$$(-CR = CR'-)_n \qquad (I)$$

where n = 5 to 1 000, and R and R' may be identical or different and each denotes H, alkyl of 1 to 5 carbon atoms, cycloalkyl, aryl, CN, F, Cl or Br, or R and R' each denote $-CH_2-$ which is linked cyclically by alkylidene bridges of the formula $(-CH_2-)_m$, where m = 1-2, or a polycyclic aromatic system which is linked in the peri-position to the double bond of the polyene (I), is reacted with a transition metal complex compound of the general formula (II)

$$M_lL_x^1L_y^2 \qquad (II)$$

where M is a transition metal of sub-groups I, IV, V, VI or VII or of group VIII of the periodic table, $L^1$ = (CO), $L^2$ = Cl, Br, I, H, (CS), (CO) or $M'R^1R^2R^3$, where $R^1$, $R^2$ and $R^3$ are identical or different and each denotes F, Cl, Br, H, $C_1$-$C_6$-alkyl, cycloalkyl, aryl, $C_1$-$C_6$-alkoxy or aryloxy, and M' is P, As or Sb, and x, y and l = 1-20, the partial exit of ligand $L^1$ or $L^2$ resulting in the formation of polymers containing polymerized units of the general formulae (III), (IV) and (V)

(III) (IV) (V)

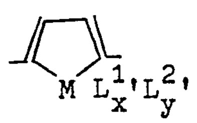 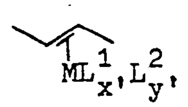 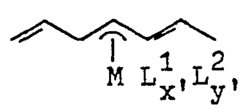

where M is a transition metal of the above-mentioned groups, $L^1$ and $L^2$ are ligands with the above-mentioned meanings, X' = 1 to 6 and Y' = 0, and these polymers are optionally reacted with conventional complexing agents.

2. A process as claimed in claim 1, wherein the transition metal compound of the general formula (II) is used in the form of a solution, and the reaction with the polyene of the general formula (I) is carried out at 0 to + 100 °C under inert gas.

3. A process as claimed in claim 1, wherein oxidizing Lewis acids, such as $AsF_5$, $SbF_5$, $SbCl_5$ and

$FeCl_3$ ; non-oxidizing Lewis acids together with an oxidizing agent, such as $PCl_5$ and $Cl_2$, $PF_5$ and NOF, $PF_5$ and $NO_2F$, and $BF_4$ and NOF ; or metals with strongly negative redox potentials, such as Li, Na, K, Rb and Cs, as conventional complexing agents, are allowed to act, in the gas phase or solution, on the polymer containing units of the general formulae (III), (IV) and (V).

4. The use of the electrically conductive polymers, prepared according to claim 1, in electrical engineering for the production of solar cells, for converting and fixing radiation, and for the production of electrical and magnetic switches.

5. The use of the electrically conductive polymers, prepared according to claim 1, for the antistatic treatment of plastics.

**Revendications**

1. Procédé de préparation de systèmes polymères conducteurs de l'électricité avec des conductibilités électriques supérieures à $10^{-2}$ S/cm, stables à l'air, caractérisé en ce que l'on fait réagir un polyène de la formule générale (I)

$$(—CR = CR'—)_n \qquad (I)$$

dans laquelle n vaut 5 à 1 000 et R et R', qui peuvent être identiques ou différents, désignent chacun un atome d'hydrogène, un radical alkyle en $C_1$ à $C_5$, cycloalkyle ou aryle, CN, F, Cl ou Br, ou R et R' = $—CH_2—$ qui est relié de façon cyclique, par des ponts alkylidène de la forme $(—CH_2—)_m$, où m = 1 ou 2, ou un système aromatique polycyclique, lié en position péri à la double liaison du polyène (I), avec un dérivé complexe de métaux de transition de la formule générale (II)

$$M_lL_x^1L_y^2 \qquad (II)$$

dans laquelle M désigne un métal de transition des sous-groupes I, IV, V, VI, VII ou VIII du Système périodique des Eléments, $L^1$ = (CO) et $L^2$ = Cl, Br, I, H, (CS), (CO) $M'R^1R^2R^3$, où $R^1$, $R^2$ et $R^3$, qui peuvent être identiques ou différents, désignent chacun F, Cl, Br, H, alkyle en $C_1$ à $C_6$, cycloalkyle, aryle, alcoxy en $C_1$ à $C_6$ ou aryloxy et M' = P, As ou Sb, x et y et l valant de 1 à 20, obtenant, avec une séparation partielle des ligands $L^1$ et $L^2$, des polymères, dans lesquels sont copolymérisées des unités structurales des formules générales (III), (IV) et (V)

(III)

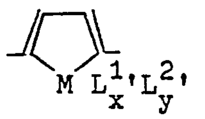

(IV)

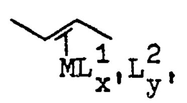

(V)

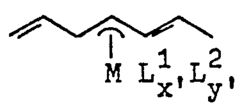

dans lesquelles M désigne l'un des métaux de transition, dont question ci-dessus, $L^1$ et $L^2$ sont les ligands mentionnés, x' = 1 à 6 et y' = 0 à 6, et en faisant le cas échéant réagir ces polymères avec des agents complexants usuels.

2. Procédé suivant la revendication 1, caractérisé en ce que le dérivé de métal de transition de la formule générale (II) est mis en œuvre sous forme d'une solution dans un solvant et la réaction avec le polyène de la formule générale (I) est effectuée sous un gaz inerte entre 0 et + 100 °C.

3. Procédé suivant la revendication 1, caractérisé en ce que les agents complexants, que l'on fait agir sur le polymère comprenant des unités structurales des formules générales (III), (IV) et (V), sont choisis parmi les acides de Lewis oxydants tels que $AsF_5$, $SbF_5$, $SbCl_5$ et $FeCl_3$, les mélanges d'acides de Lewis non oxydants et d'un agent d'oxydation comme $PCl_5$ et $Cl_2$, $PF_5$ et NOF, $PF_5$ et $NO_2F$ ou $BF_4$ et NOF, et les métaux aux potentiels redox fortement négatifs comme Li, Na, K, Rb et Cs, la réaction ayant lieu en phase gazeuse ou en solution.

4. Utilisation des polymères conducteurs de l'électricité, préparés par le procédé suivant la revendication 1, dans le domaine de l'électro-technique pour la fabrication de cellules solaires, pour la transformation et la fixation de radiations et pour la fabrication de commutateurs électriques et magnétiques.

5. Utilisation des polymères conducteurs de l'électricité, préparés par le procédé suivant la revendication 1, pour l'apprêtage anti-statique de matières plastiques.